# FASCICULE DE BREVET EUROPEEN

(11) **EP 2 382 364 B1**
(45) Date de publication et mention de la délivrance du brevet: **03.07.2013**
(21) Numéro de dépôt: 09805729.2
(22) Date de dépôt: 17.12.2009
(51) Int. Cl.: E05D 5/06, B60R 21/34, E05D 11/00

(54) **SYSTEME D'ARTICULATION D'UN CAPOT DE VEHICULE AUTOMOBILE ET CAPOT ASSOCIE**
SCHARNIERSYSTEM FÜR DIE HAUBE EINES KRAFTFAHRZEUGS UND ENTSPRECHENDE HAUBE
HINGE SYSTEM FOR THE BONNET OF AN AUTOMOBILE, AND RELATED BONNET

(30) Priorité: 29.01.2009 FR 0950554
(43) Date de publication de la demande: 02.11.2011
(73) Titulaire: Peugeot Citroën Automobiles SA, 78140 Vélizy-Villacoublay (FR)
(72) Inventeur: BENANE, Saïd, F-94550 Chevilly Larue (FR); GOURVENNEC, Thibault, F-91210 Draveil (FR)
(74) Mandataire: Fernandez, Francis Lionel
(86) Numéro de dépôt international: PCT/FR2009/052593
(87) Numéro de publication internationale: WO 2010/086518

(56) Documents cités:
- DE-A1-102004 011 334
- FR-A- 2 916 712
- GB-A- 2 372 536

## Description

La présente invention se rapporte à un système d'articulation d'un capot de véhicule automobile et à un capot de véhicule automobile équipé d'un tel système d'articulation.

Elle se rapporte plus particulièrement à un système d'articulation d'un capot de véhicule automobile, comprenant une charnière d'articulation pourvue d'un charnon mobile et d'un charnon fixe articulés l'un par rapport à l'autre autour d'un axe de pivotement, et comprenant en outre un support de charnière auquel est fixé le charnon fixe.

La plupart des véhicules automobiles comportent un capot articulé dans sa partie arrière à la structure du véhicule par un tel système d'articulation. De manière usuelle, le capot est articulé sur la structure du véhicule au moyen de deux systèmes d'articulation disposés respectivement sur la droite et la gauche du capot, lesdits systèmes d'articulation étant rapportés sur des éléments de carrosserie comme par exemple les doublures d'aile avant.

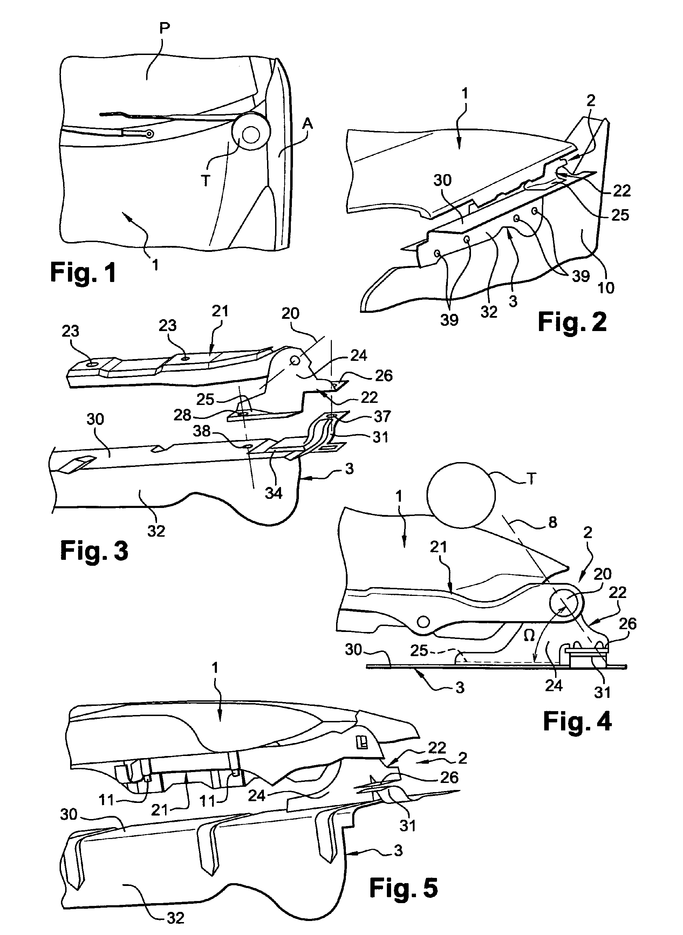

La figure 1 illustre la partie avant d'un tel véhicule automobile comportant un capot 1 avant monté de manière à obturer un compartiment recevant notamment le groupe moto-propulseur non visible ; ledit capot 1 étant disposé dans la continuité du pare-brise P, entre les deux ailes avant A du véhicule, ces ailes avant étant des éléments de carrosserie faisant partie de la structure du véhicule.

En cas de choc du véhicule avec un piéton, la tête T du piéton (schématisée par une sphère sur la figure 1) vient en général heurter le capot 1. Lors de l'impact de la tête T du piéton sur le capot 1, il se produit un enfoncement du capot jusqu'à une éventuelle collision de la tête sur des éléments rigides situés sous la capot, tels que les charnières d'articulation du capot à la structure du véhicule. Ces impacts contre des éléments rigides constituent la cause principale des décès ou des blessures des piétons renversés.

Pour éviter de telles conséquences, certains véhicules automobiles sont équipés de charnières pourvues d'éléments propres à absorber le choc. Néanmoins, ces éléments ne permettent généralement pas d'offrir un enfoncement suffisamment profond du capot pour protéger au mieux le piéton lors du choc. En outre, ces charnières sont peu résistantes et se déforment facilement lorsque le capot est manipulé par l'utilisateur ou lorsque des contraintes extérieures sont appliquées sur le capot.

Il est connu du document GB2372536 un système d'articulation d'un capot de véhicule automobile, comprenant une charnière d'articulation pourvue d'un charnon mobile et d'un charnon fixe articulés l'un par rapport à l'autre autour d'un axe de pivotement, et comprenant en outre un support de charnière auquel est fixé le charnon fixe, le support de charnière comprenant une embase et un moyen de rattachement dudit charnon fixe sur ledit support de charnière, ledit moyen de rattachement étant conformée pour fléchir et/ou rompre sous l'effet d'une contrainte prédéterminée exercée sur la charnière avant la déformation de l'embase.

L'invention a pour but de résoudre en tout ou partie ces inconvénients en proposant un système d'articulation qui soit à la fois résistant aux manoeuvres et qui puisse absorber une grande partie des efforts liés à un choc piéton.

A cet effet, elle propose un système d'articulation d'un capot de véhicule automobile, comprenant une charnière d'articulation pourvue d'un charnon mobile et d'un charnon fixe articulés l'un par rapport à l'autre autour d'un axe de pivotement, et comprenant en outre un support de charnière auquel est fixé le charnon fixe, ledit système d'articulation étant remarquable en ce que le support de charnière comprend une embase et un moyen de rattachement dudit charnon fixe sur ledit support de charnière, ledit moyen de rattachement étant conformée pour fléchir et/ou rompre sous l'effet d'une contrainte prédéterminée exercée sur la charnière avant la déformation de l'embase, en ce que le charnon fixe comprend une première partie rattachée à ladite embase et une deuxième partie rattachée audit moyen de rattachement et en ce que le moyen de rattachement comprend une patte faisant saillie en élévation de l'embase du support de charnière, ladite patte présentant une partie d'extrémité en surplomb par rapport à l'embase, et dans lequel la deuxième partie du charnon fixe est fixée sur ladite partie d'extrémité de la patte.

Cette patte est bien entendu conformée pour fléchir sous l'effet d'une contrainte prédéterminée exercée sur la charnière avant la déformation de l'embase. Avec une telle patte en élévation, l'amplitude du fléchissement de la patte est augmentée de sorte que l'absorption du choc piéton en est améliorée.

Ainsi, lors d'un choc piéton au niveau du système d'articulation, le moyen de rattachement se déforme en flexion, voire rompt, permettant ainsi au charnon fixe de basculer par rapport à sa première partie rattachée à l'embase du support de charnière, amortissant ainsi l'effort lié au choc piéton. L'invention permet ainsi un enfoncement de la tête du piéton suffisamment profondément afin de limiter les séquelles de ce dernier, en absorbant une grande partie de l'énergie du choc.

De façon avantageuse, la patte du support de charnière présente un orifice de passage pour un organe de fixation de la deuxième partie du charnon fixe sur ladite patte, et dans lequel un axe passant par ledit orifice et croisant l'axe de pivotement fait un angle prédéterminé avec l'embase du support de charnière, ledit angle étant compris entre 40 et 60° et étant préférentiellement de l'ordre de 50°.

L'angle d'impact de la tête d'un piéton se situe généralement entre 40 et 60° par rapport à un plan horizontal, et l'embase du support de charnière s'étend préférentiellement de façon sensiblement horizontale. De la sorte, un impact de la tête du piéton sur le capot, au niveau de l'axe de pivotement de la charnière, est mieux absorbé avec une telle configuration. En effet, la direction de l'effort du choc piéton passe ainsi de façon optimale par la patte déformable, et ainsi le fléchissement est amélioré et donc l'absorption du choc est augmentée.

Selon une caractéristique, le charnon mobile pivote à l'intérieur d'un plan de rotation perpendiculaire à l'axe de pivotement, et dans lequel les première et deuxième parties du charnon fixe s'étendent de part et d'autre dudit plan de rotation.

Cette configuration permet notamment un fléchissement du moyen de rattachement vers l'intérieur du capot, et donc un effondrement de la charnière vers l'intérieur, avec l'avantage d'améliorer l'absorption pour un choc qui se situe généralement vers l'intérieur du capot.

Selon une autre caractéristique, le charnon fixe comporte un flasque en articulation avec le charnon mobile, une partie latéralement rabattue par rapport audit flasque et formant la première partie du charnon fixe, et une patte faisant saillie dudit flasque et formant la deuxième partie du charnon fixe, ladite patte du charnon fixe étant conformée pour fléchir sous l'effet d'une contrainte prédéterminée exercée sur la charnière avant la déformation du flasque.

Préférentiellement, la partie latéralement rabattue et la patte du charnon fixe s'étendent de part et d'autre du flasque.

Avantageusement, le support de charnière comprend au moins un moyen de renfort pour rigidifier la liaison entre le moyen de rattachement et l'embase, ledit moyen de renfort étant notamment réalisé sous la forme d'un embouti ou bossage formé dans ladite embase et dans ledit moyen de rattachement. Ainsi, le moyen de renfort permet de contrôler le fléchissement du moyen de rattachement.

Dans un mode de réalisation particulier, le support de charnière est une pièce d'un seul tenant, notamment une pièce emboutie dans un matériau métallique.

L'invention se rapporte également à un capot de véhicule automobile équipé d'au moins un système d'articulation conforme à l'invention.

De façon avantageuse, le moyen de rattachement du support de charnière s'étend vers l'intérieur du capot, pour permettre un fléchissement vers l'intérieur du capot.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 (déjà décrite) est une vue de dessus de la partie avant d'un véhicule automobile ;
- la figure 2 est une vue en perspective d'un système d'articulation conforme à l'invention en situation dans un véhicule automobile, vue de l'extérieur du véhicule ;
- la figure 3 est une vue éclatée en perspective d'un système d'articulation conforme à l'invention ;
- la figure 4 est une vue de côté du système d'articulation de la figure 3 en situation dans un véhicule automobile, vue de l'intérieur du véhicule ;
- les figures 5 et 6 sont des vues en perspective partielle de systèmes d'articulation conformes à l'invention en situation dans un véhicule automobile, respectivement vue de l'intérieur et de l'extérieur du véhicule ;
- la figure 7 est une vue en perspective du système d'articulation de la figure 3 dans un état déformé pendant un choc piéton ; et
- les figures 8 et 9 sont des vues de face d'un système d'articulation conforme à l'invention en situation dans un véhicule, respectivement en début et en fin de choc piéton.

L'invention, décrite en référence aux figures 2 à 9, concerne un système d'articulation d'un capot 1 de véhicule automobile monté sur la structure du véhicule, et en particulier sur une doublure d'aile avant 10 visible en figure 2.

Un véhicule peut notamment comprendre deux systèmes d'articulation fixés de chaque côté de la structure avant du véhicule, c'est-à-dire sur les doublures d'aile avant 10 respectivement droite et gauche du véhicule.

Le système d'articulation comprend :
- une charnière d'articulation 2 ; et
- un support de charnière 3 auquel est fixée la charnière d'articulation 2.

La charnière d'articulation 2 comprend un charnon mobile 21 et un charnon fixe 22 articulés l'un par rapport à l'autre autour d'un axe de pivotement 20 ; cet axe de pivotement 20 s'étendant selon la direction transversale au véhicule (de droite à gauche).

Le charnon mobile 21 se présente sous la forme d'un bras s'étendant selon la direction longitudinale du véhicule (d'avant en arrière) et sur lequel est fixé le capot 1. Comme illustré en figure 3, le charnon mobile 21 est pourvu d'orifices 23 permettant le passage de vis de fixation 11 (visibles uniquement en figure 5) du capot 1 sur le charnon mobile 21. Le charnon mobile 21 est articulé sur son extrémité arrière avec le charnon fixe 22.

Le charnon fixe 22 est fixé sur le support de charnière 3 et comporte :
- un flasque 24 sur lequel est articulé le charnon mobile 20, ledit flasque 24 s'étendant sensiblement selon dans plan vertical et longitudinal du véhicule ;
- une partie latéralement rabattue 25 par rapport audit flasque 24, ladite partie latéralement rabattue 25 s'étendant sensiblement dans un plan horizontal ; et
- une patte 26 faisant saillie du flasque 24 et présentant une partie d'extrémité qui est plane et sensiblement horizontale.

La partie latéralement rabattue 25 et la patte 26 s'étendent de part et d'autre du flasque 24. La partie latéralement rabattue 25 s'étend à partir de la face externe du flasque 24, autrement dit la face située du côté extérieur au véhicule, tandis que la patte 26 s'étend à partir de la face interne du flasque 24 opposée à la face externe.

En outre, la patte 26 est disposé à l'arrière du charnon fixe 22 relativement à l'axe de pivotement 20, tandis que la partie latéralement rabattue 25 est disposée principalement à l'avant du charnon fixe 22.

Comme visible aux figures 3, 6 et 8, la partie d'extrémité de la patte 26 est surélevée d'une hauteur prédéterminée (ou disposée en surplomb) par rapport à la partie latéralement rabattue 25. Autrement dit, la partie d'extrémité de la patte 26 et la partie latéralement rabattue 25 ne sont pas coplanaires et s'étendent dans des plans sensiblement horizontaux décalés verticalement ; la partie d'extrémité de la patte 26 étant située plus haute que la partie latéralement rabattue 25.

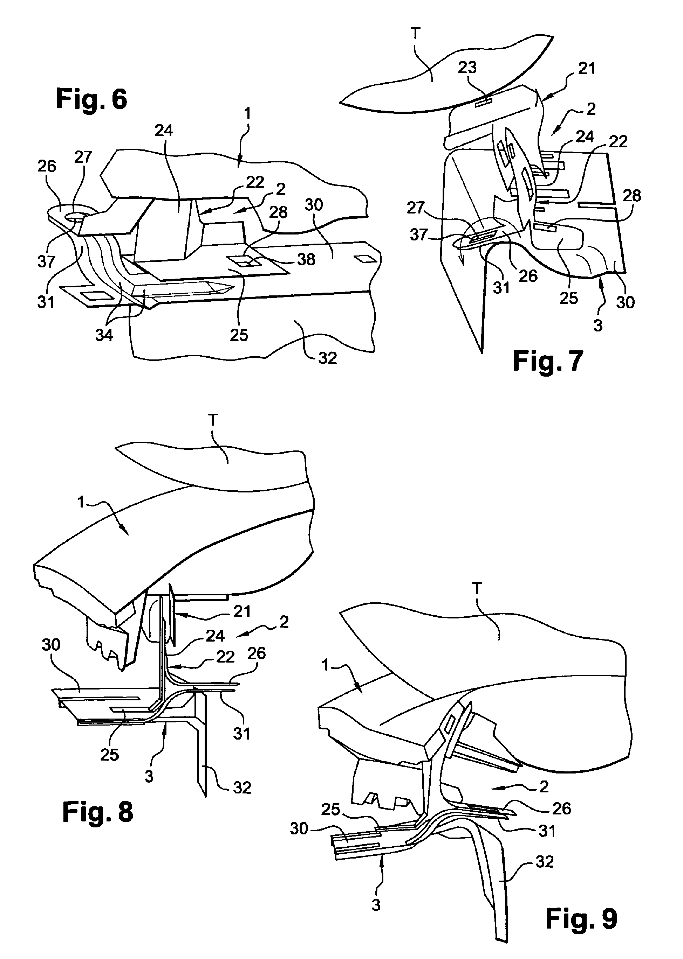

La partie latéralement rabattue 25 et la patte 26 sont fixées sur le support de charnière 3 au moyen de vis de fixation (non illustrées sur les figures). Comme visible aux figures 6 et 7, la partie d'extrémité de la patte 26 est pourvue d'un orifice 27 pour le passage d'une vis et la partie latéralement rabattue 25 est également pourvue d'un orifice 28 pour le passage d'une autre vis. L'orifice 27 est situé à l'arrière du charnon fixe 22 relativement à l'axe de pivotement 20, tandis que l'orifice 28 est disposé à l'avant du charnon fixe 22. Le support de charnière 3 comprend :
- une embase 30 sensiblement plane et horizontale qui est fixée sur la doublure d'aile avant 10 ; et
- une patte 31 faisant saillie en élévation de l'embase 30 et présentant une partie d'extrémité qui est plane et sensiblement horizontale.

L'embase 30 s'étend selon une direction sensiblement longitudinale en-dessous du charnon mobile 21 de la charnière 2. Cette embase 30 présente une partie latéralement rabattue 32 sensiblement plane et verticale. Comme illustré en figure 2, le support de charnière 3 est fixé sur la doublure d'aile avant 10 correspondante par soudure, au moyen de points de soudure 39 réalisés entre ladite doublure d'aile avant 10 et la partie latéralement rabattue 32.

La partie latéralement rabattue 25 est destinée à être fixée sur l'embase 30. Pour cela, l'embase 30 est pourvue d'un orifice 38 (visible aux figures 3 et 6) qui vient en alignement avec l'orifice 28 ménagé dans la partie latéralement rabattue 25 du charnon fixe 22, afin de permettre le passage de la vis de fixation correspondante.

Comme visible aux figures 3, 5, 6 et 8, la partie d'extrémité de la patte 31 est surélevée d'une hauteur prédéterminée (ou disposée en surplomb) par rapport à l'embase 30. Autrement dit, la partie d'extrémité de la patte 31 et l'embase 30 ne sont pas coplanaires et s'étendent dans des plans sensiblement horizontaux décalés verticalement ; la partie d'extrémité de la patte 31 étant située plus haute que l'embase 30.

La patte 31 s'étend vers l'intérieur du véhicule pour venir en regard de la patte 26 du charnon fixe 22. Le décalage de hauteur entre la partie d'extrémité de la patte 31 et l'embase 30 du support de charnière 3 est sensiblement identique au décalage de hauteur entre la partie d'extrémité de la patte 26 et la partie latéralement rabattue 25 du charnon fixe 22.

La patte 31 du support de charnière 3 est destinée à être fixée sur la patte 26 du charnon fixe 22. Pour cela, la patte 31 est pourvue d'un orifice 37 (visible aux figures 3 et 6) qui vient en alignement avec l'orifice 27 ménagé dans la patte 26 du charnon fixe 22, afin de permettre le passage de la vis de fixation correspondante.

Lorsque le charnon fixe 22 est fixé sur le support de charnière 3 au moyen de deux vis, la patte 26 du charnon fixe 22 est vissée et plaquée contre la patte 31 du support de charnière 3, et la partie latéralement rabattue 25 du charnon fixe 22 est également vissée et plaquée contre l'embase 30 du support de charnière 3.

La figure 4 illustre un axe 8 fictif qui :
- passe par les orifices 27, 37 ménagés dans les respectivement patte 26 du charnon fixe 22 et patte 31 du support de charnière 3 ; et qui
- croise l'axe de pivotement 20.

Cet axe 8 fait un angle Ω prédéterminé avec l'embase 30 du support de charnière 3, cet angle Ω étant compris entre 40 et 60° et étant préférentiellement de l'ordre de 50°. En effet, il a été constaté que, lors d'un choc piéton, la tête T du piéton impacte le capot 1 avec un angle Ω d'environ 50° par rapport à l'horizontale ; de sorte que l'effort transmis par la tête T du piéton, correspondant à l'effort à absorber pour limiter les traumatismes sur le piéton, s'exerce sur le capot 1 et sur la charnière 2 avec cet angle Ω d'environ 50°.

Lorsqu'un piéton, et notamment la tête T d'un piéton, vient heurter le capot 1, il exerce une force sur la charnière 2 généralement dirigée vers l'intérieur du capot 1. Sous l'action de cette force, et comme illustré en figure 7 et 9, la patte 26 du charnon fixe 22 exerce un effort sur la patte 31 du support de charnière 3 qui se déforme vers l'intérieur du capot 1 par fléchissement. Ce fléchissement, illustré par une flèche arquée sur la figure 7, correspond sensiblement à un pivotement de la patte 31 qui permet un enfoncement de la tête T du piéton tout en absorbant l'effort transmis par ce choc.

En outre, du fait que les vis de fixation du charnon fixe 22 sont disposés de part et d'autre du flasque 24 (autrement dit du plan de pivotement du charnon mobile 21), l'effort du choc conduit à un travail en flexion de la patte 31, localisé au niveau de la vis de fixation de cette patte 31 sur la patte 26 du charnon fixe 22, tout en conduisant à un effort en compression au niveau de la vis de fixation de la partie latéralement rabattue 25 sur l'embase 30 du support de charnière 3. Cette configuration permet un chargement plus efficace au niveau de la patte 31 déformable en flexion, et donc une meilleure absorption de l'effort imposé par le choc piéton.

L'orientation mentionnée ci-dessus de l'axe 8, de façon à réaliser l'angle Ω prédéterminé, permet une bonne transmission de l'effort en direction de la patte 31 apte à fléchir, optimisant ainsi l'absorption du choc piéton par le système d'articulation.

Dans le but de contrôler la flexion de la patte 31 du support de charnière 3 en cas de choc, et de conserver une rigidité suffisante de la patte 31 en situation normale de vie, le support de charnière 3 comprend au moins un moyen de renfort pour rigidifier la liaison entre la patte 31 et l'embase 30. Dans la réalisation illustrée sur les figures 3 et 6, le moyen de renfort est réalisé sous la forme d'un embouti ou bossage 34, faisant saillie de la face inférieure du support de charnière 3 (correspondant à la face opposée à la charnière 2) formé à la fois dans l'embase 30 et dans la patte 31. Comme visible en figure 6, cet embouti ou bossage 34 s'étend selon une ligne continue en relief ménagée dans l'embase 30 jusqu'à la patte 31 au niveau de sa partie d'extrémité dans laquelle est ménagé, l'orifice 37. Le dimensionnement et la forme de cet embouti ou bossage dépend de la rigidité ou flexibilité souhaitée pour la patte 31.

Dans une variante non illustrée, le moyen de renfort est réalisé sous la forme d'une pièce rapportée et fixée sur l'embase 30 et la patte 31.

Bien entendu l'exemple de mise en oeuvre évoqué ci-dessus ne présente aucun caractère limitatif et d'autres détails et améliorations peuvent être apportés au système d'articulation selon l'invention, sans pour autant sortir du cadre de l'invention où d'autres formes de support de charnière et/ou de charnon fixe peuvent par exemple être réalisées.

## Revendications

1. Système d'articulation d'un capot (1) de véhicule automobile, comprenant une charnière (2) d'articulation pourvue d'un charnon mobile (21) et d'un charnon fixe (22) articulés l'un par rapport à l'autre autour d'un axe de pivotement (20), et comprenant en outre un support de charnière (3) auquel est fixé le charnon fixe (22), **caractérisé en ce que** le support de charnière (3) comprend une embase (30) et un moyen de rattachement (31) dudit charnon fixe (22) sur ledit support de charnière (3), ledit moyen de rattachement (31) étant conformé pour fléchir et/ou rompre sous l'effet d'une contrainte prédéterminée exercée sur la charnière (2) avant la déformation de l'embase (30), **en ce que** le charnon fixe (22) comprend une première partie (25) rattachée à ladite embase (30) et une deuxième partie (26) rattachée audit moyen de rattachement (31) et **en ce que** le moyen de rattachement comprend une patte (31) faisant saillie en élévation de l'embase (30) du support de charnière (3), ladite patte (31) présentant une partie d'extrémité en surplomb par rapport à l'embase (30), et dans lequel la deuxième partie (26) du charnon fixe (22) est fixée sur ladite partie d'extrémité de la patte (31).

2. Système selon la revendication 1, dans lequel la patte (31) du support de charnière (3) présente un orifice (37) de passage pour un organe de fixation de la deuxième partie (26) du charnon fixe (22) sur ladite patte (31), et dans lequel un axe (8) passant par ledit orifice (37) et croisant l'axe de pivotement (20) fait un angle (Ω) prédéterminé avec l'embase (30) du support de charnière (3), ledit angle (Ω) étant compris entre 40 et 60° et étant préférentiellement de l'ordre de 50°.

3. Système selon l'une quelconque des revendications 1 à 2, dans lequel le charnon mobile (21) pivote à l'intérieur d'un plan de rotation perpendiculaire à l'axe de pivotement (20), et dans lequel les première et deuxième parties (25, 26) du charnon fixe (22) s'étendent de part et d'autre dudit plan de rotation.

4. Système selon l'une quelconque des revendications 1 à 3, dans lequel le charnon fixe (22) comporte un flasque (24) en articulation avec le charnon mobile (21), une partie latéralement rabattue (25) par rapport audit flasque (24) et formant la première partie du charnon fixe (22), et une patte (26) faisant saillie dudit flasque (24) et formant la deuxième partie du charnon fixe (22), ladite patte (26) du charnon fixe (22) étant conformée pour fléchir sous l'effet d'une contrainte prédéterminée exercée sur la charnière (2) avant la déformation du flasque (24).

5. Système selon la revendication 4, dans lequel la partie latéralement rabattue (25) et la patte (26) du charnon fixe (22) s'étendent de part et d'autre du flasque (24).

6. Système selon l'une quelconque des revendications 1 à 5, dans lequel le support de charnière (3) comprend au moins un moyen de renfort (34) pour rigidifier la liaison entre le moyen de rattachement (31) et l'embase (30), ledit moyen de renfort étant notamment réalisé sous la forme d'un embouti ou bossage formé dans ladite embase (30) et dans ledit moyen de rattachement (31).

7. Système selon l'une quelconque des revendications 1 à 6, dans lequel le support de charnière (3) est une pièce d'un seul tenant, notamment une pièce emboutie dans un matériau métallique.

8. Capot de véhicule automobile équipé d'au moins un système d'articulation conforme à l'une quelconque des revendications 1 à 7.

9. Capot selon la revendication 8, dans lequel le moyen de rattachement (31) du support de charnière (3) s'étend vers l'intérieur du capot (1).

## Patentansprüche

1. Anlenksystem einer Kraftfahrzeughaube (1), das ein Anlenkscharnier (2) aufweist, das mit einem beweglichen Scharnierflügel (21) und einem stationären Scharnierflügel (22), die zueinander um eine Schwenkachse (20) angelenkt sind, versehen ist, und das ferner einen Scharnierträger (3) aufweist, an dem der stationäre Scharnierflügel (22) befestigt ist, **dadurch gekennzeichnet, dass** der Scharnierträger (3) eine Grundplatte (30) und ein Anschlussmittel (31) des stationären Scharnierflügels (22) auf dem Scharnierträger (3) aufweist, wobei das Anschlussmittel (31) ausgebildet ist, um sich unter der Einwirkung einer vorbestimmten Belastung, die auf das Scharnier (2) ausgeübt wird, vor der Verformung der Grundplatte (30) zu biegen und/oder zu brechen, und dass der stationäre Scharnierflügel (22) einen ersten Teil (25) aufweist, der an die Grundplatte (30) angeschlossen ist, und einen zweiten Teil (26), der an das Anschlussmittel (31) angeschlossen ist, und dass das Anschlussmittel eine Pratze (31) aufweist, die in die Höhe von der Grundplatte (30) des Scharnierträgers (3) vorsteht, wobei die Pratze (31) einen Endteil aufweist, der in Bezug zu der Grundplatte (30) auskragt, und in der der zweite Teil (26) des stationären Scharnierflügels (22) auf dem Endteil der Pratze (31) befestigt ist.

2. System nach Anspruch 1, bei dem die Pratze (31) des Scharnierträgers (3) eine Durchgangsöffnung (37) für ein Befestigungsorgan des zweiten Teils (26) des stationären Scharnierflügels (22) auf der Pratze (31) aufweist und bei dem eine Achse (8), die durch die Öffnung (37) durchgeht und die Schwenkachse (20) kreuzt, einen vorbestimmten Winkel (Ω) mit der Grundplatte (30) des Scharnierträgers (3) bildet, wobei der Winkel (Ω) zwischen 40 und 60° und vorzugsweise in der Größenordnung von 50° liegt.

3. System nach einem der Ansprüche 1 bis 2, bei dem der bewegliche Scharnierflügel (21) in dem Inneren einer Rotationsebene senkrecht zu der Schwenkachse (20) schwenkt, und bei dem sich der erste und der zweite Teil (25, 26) des stationären Scharnierflügels (22) zu beiden Seiten der Rotationsebene erstrecken.

4. System nach einem der Ansprüche 1 bis 3, bei dem der stationäre Scharnierflügel (22) einen Flansch (24) aufweist, der mit dem beweglichen Scharnierflügel (21) angelenkt ist, einen in Bezug zu dem Flansch (24) seitlich herunter geklappten Teil (25) und der den ersten Teil des stationären Scharnierträgers (22) bildet, und eine Pratze (26), die von dem Flansch (24) vorsteht und den zweiten Teil des stationären Scharnierflügels (22) bildet, wobei die Pratze (26) des stationären Scharnierträgers (22) ausgebildet ist, um sich unter der Einwirkung einer vorbestimmten Belastung, die auf das Scharnier (2) ausgeübt wird, vor der Verformung der Flansch (24) zu biegen.

5. System nach Anspruch 4, bei dem sich der seitlich heruntergeklappte Teil (25) und die Pratze (26) des stationären Scharnierträgers (22) zu beiden Seiten des Flanschs (24) erstrecken.

6. System nach einem der Ansprüche 1 bis 5, bei dem der Scharnierträger (3) mindestens ein Verstärkungsmittel (34) zum Verstärken der Verbindung zwischen dem Anschlussmittel (31) und der Grundplatte (30) aufweist, wobei das Verstärkungsmittel insbesondere in der Form einer Stulpe oder eines Höckers hergestellt ist, der in der Grundplatte (30) und in dem Anschlussmittel (31) ausgebildet ist.

7. System nach einem der Ansprüche 1 bis 6, bei dem der Scharnierträger (3) ein einstückiger Teil, insbesondere ein in einen Metallwerkstoff gestanzter Teil ist.

8. Kraftfahrzeughaube, die mit mindestens einem Anlenksystem nach einem der Ansprüche 1 bis 7 ausgerüstet ist.

9. Kraftfahrzeughaube nach Anspruch 8, bei der sich das Anschlussmittel (31) des Scharnierträgers (3) zu dem Inneren der Haube (1) erstreckt.

## Claims

1. A hinge system for a bonnet (1) of an automobile, including a hinge (2) provided with a mobile knuckle (21) and a fixed knuckle (22) articulated relative to each other about a pivot axis (20) and further including a hinge mounting (3) to which the fixed knuckle (22) is attached, **characterized in that** the hinge mounting (3) includes a base (30) and a means (31) for connecting the said fixed knuckle (22) on the said hinge mounting (3), the said connecting means (31) being shaped to as to bend and/or break under the effect of a predetermined stress exerted on the hinge (2) before the deformation of the base (30), **in that** the fixed knuckle (22) includes a first portion (25) connected to the said base (30) and a second portion (26) connected to the said connecting means (31) and **in that** the connecting means includes a lug (31) projecting upwards from the base (30) of the hinge mounting (3), the said lug (31) have an end portion overhanging with respect to the base (30), and in which the second portion (26) of the fixed knuckle (22) is attached on the said end portion of the lug (31).

2. The system according to Claim 1, in which the lug (31) of the hinge mounting (3) has a passage opening (37) for an attachment member of the second portion (26) of the fixed knuckle (22) on the said lug (31), and in which an axis (8) passing through the said opening (37) and intersecting the pivot axis (20) forms a predetermined angle (Ω) with the base (30) of the hinge mounting (3), the said angle (Ω) being comprised between 40 and 60° and being preferably in the order of 50°.

3. The system according to any one of Claims 1 and 2, in which the mobile knuckle (21) pivots within a rotation plane perpendicular to the pivot axis (20), and in which the first and second portions (25, 26) of the fixed knuckle (22) extend on either side of the said rotation plane.

4. The system according to any one of Claims 1 to 3, in which the fixed knuckle (22) comprises a flange (24) in articulation with the mobile knuckle (21), a laterally folded-back portion (25) with respect to the said flange (24) and forming the first portion of the fixed knuckle (22), and a lug (26) projecting from the said flange (24) and forming the second portion of the fixed knuckle (22), the said lug (26) of the fixed knuckle (22) being shaped to bend under the effect of a predetermined stress exerted on the hinge (2) before the deformation of the flange (24).

5. The system according to Claim 4, in which the laterally folded-back portion (25) and the lug (26) of the fixed knuckle (22) extend on either side of the flange (24).

6. The system according to any one of Claims 1 to 5, in which the hinge mounting (3) includes at least one reinforcement means (34) to make rigid the connection between the connecting means (31) and the base (30), the said reinforcement means being realized in particular in the form of a pressed section or boss formed in the said base (30) and in the said connecting means (31).

7. The system according to any one of Claims 1 to 6, in which the hinge mounting (3) is a part in a single piece, in particular a stamped part in a metallic material.

8. An automobile bonnet equipped with at least one hinge system according to any one of Claims 1 to 7.

9. The bonnet according to Claim 8, in which the connecting means (31) of the hinge mounting (3) extends towards the interior of the bonnet (1).
